# EUROPÄISCHE PATENTSCHRIFT

(11) **EP 4 269 201 B1**
(45) Veröffentlichungstag und Bekanntmachung des Hinweises auf die Patenterteilung: **23.10.2024**
(21) Anmeldenummer: 23169008.2
(22) Anmeldetag: 20.04.2023
(51) Int. Cl.: B60W 30/095, B60W 50/14, B60W 30/09

(54) **ARBEITSFAHRZEUG MIT KOLLISIONSWARNVORRICHTUNG**
WORK VEHICLE WITH COLLISION WARNING DEVICE
VÉHICULE DE TRAVAIL AVEC DISPOSITIF D'AVERTISSEMENT DE COLLISION

(30) Priorität: 28.04.2022 DE 102022110385
(43) Veröffentlichungstag der Anmeldung: 01.11.2023
(73) Patentinhaber: Wacker Neuson Linz GmbH, 4063 Hörsching (AT)
(72) Erfinder: MITTERMAYR, Thomas, 4101 Feldkirchen an der Donau (AT); ARTNER, Maximilian, 4063 Hörsching (AT); BENDER, Frank Alexander, 70190 Stuttgart (DE)
(74) Vertreter: Müller Hoffmann & Partner

(56) Entgegenhaltungen:
- EP-A2- 1 320 082
- DE-U1- 202016 100 964
- US-A1- 2014 297 135
- US-A1- 2018 154 935
- US-A1- 2018 170 369

## Beschreibung

Die Erfindung betrifft ein Arbeitsfahrzeug, nämlich eine mobile Arbeitsmaschine bzw. Baumaschine wie einen Dumper, einen Radlader oder einen Teleskopradlager. Insbesondere betrifft die Erfindung ein knickgelenktes Arbeitsfahrzeugs.

Mobile Arbeitsfahrzeuge bzw. Arbeitsmaschinen weisen in der Regel einen hydrostatischen Fahrantrieb, zum Teil mit elektrohydraulischer Ansteuerung, oder auch einen elektrifizierten Fahrantrieb auf. Die Bedienung der Maschine (Vorgabe der Fahrgeschwindigkeit bzw. deren Reduzierung und Bremsen sowie Lenken) obliegt vollständig dem Fahrer. Zur Überwachung des Umfelds ist der Fahrer auf seine Sinnesorgane (Sehen, Hören) angewiesen. Dabei kann er durch Rückfahrspiegel und bisweilen auch Rückfahr- oder Bird-View-Kameras unterstützt werden.

Derartige Arbeitsfahrzeuge weisen häufig eine besondere Beweglichkeit auf, um auch in schwierigem Gelände gut fahrbar zu sein. Bei dieser Bauart können die Arbeitsfahrzeuge einen Vorderwagen (z.B. eine erste Fahreinheit) und einen Hinterwagen (z.B. eine zweite Fahreinheit) aufweisen. Zwischen dem Vorderwagen und dem Hinterwagen kann ein Gelenk angeordnet werden, zum Koppeln des Vorderwagens mit dem Hinterwagen, derart, dass der Vorderwagen und der Hinterwagen um wenigstens eine Hochachse des Arbeitsfahrzeugs relativ zueinander bewegbar sind. Da somit der Vorderwagen und der Hinterwagen relativ zueinander eine Art "Knickbewegung" machen können, wird in diesem Zusammenhang auch von knickgelenkten Arbeitsfahrzeugen gesprochen. Das Knicken zwischen Vorderwagen und Hinterwagen ermöglicht eine Lenkbewegung und damit Kurvenfahrten, da die an Vorder- und Hinterwagen angeordneten Räder bzw. Radachsen in einem Winkel zueinander gestellt werden können.

Die Lenkung des Arbeitsfahrzeugs kann z.B. durch einen hydraulischen Zylinder bewirkt werden, der am Knickgelenk angeordnet ist und zwischen den beiden Fahreinheiten durch das Knickgelenk verbundenen Fahreinheiten wirkt, um den Winkel zwischen den beiden Fahreinheiten zu verstellen.

Zur Verbesserung der Geländegängigkeit ist es darüber hinaus bekannt, das Gelenk derart auszubilden, dass es auch eine Relativbewegung zwischen Vorderwagen und Hinterwagen bzw. erster und zweiter Fahreinheit um die Längsachse des Arbeitsfahrzeugs zulässt. Diese Relativbewegung wird auch als "Pendeln" bezeichnet. Ein derart kombiniertes Gelenk wird dementsprechend auch als "Knick-Pendel-Gelenk" benannt. Beispiele dafür sind aus der DE 101 30 530 C1 oder der EP 2 218 835 A1 bekannt.

Eine der Fahreinheiten des Arbeitsfahrzeugs kann beispielsweise den Fahrerstand (Fahrersitz) bzw. die Fahrerkabine tragen, während an der anderen Fahreinheit ein geeignetes Arbeitswerkzeug, wie z.B. eine Laderschaufel (für einen Lader) oder eine Mulde (für einen Dumper) angebracht werden kann.

Der Fahrzeugaufbau macht eine vollständige Einsicht in den Gefahrenbereich vor, hinter oder neben der Maschine durch den Fahrer häufig unmöglich oder schwierig. So ist es für den Fahrer aus seiner Position aus dem Fahrersitz heraus oft nur eingeschränkt möglich, bei einem Dumper über die mit Schüttgut befüllte Mulde hinwegzusehen. Gerade Hindernisse, die dicht vor dem Fahrzeug stehen, können vom Fahrer dadurch nicht erkannt werden.

In Verbindung mit einem häufigen Rangierbetrieb können dadurch leicht Gefahrensituationen für Menschen und Fahrzeuge in unmittelbarer Umgebung oder auch für die Maschine und deren Fahrer selbst entstehen. Auch ist der Fahrer nur in der Lage, zu einem bestimmten Zeitpunkt lediglich einen einzelnen Bereich zu überwachen, während sich in anderen, vom Fahrer nicht überwachten Bereichen unbemerkt neue Gefahrensituationen ergeben können. Gefahrensituationen können dabei insbesondere durch Objekte im Nahbereich direkt an der Maschine entstehen, oder auch durch weiter entfernte Objekte, die sich aber mit entsprechender Relativgeschwindigkeit auf die Maschine zu bewegen, so dass es zu einer Kollision kommen könnte. In jedem Fall ist eine Kollision mit einem Hindernis zu vermeiden oder wenigstens derart abzuschwächen, dass kein Schaden an Mensch und Maschine entstehen kann.

Aus der US 2018/170369 A1 ist ein knickgelenkter Lader mit einem System zur Kollisionsminderung bekannt. Das System weist Sensoren auf, um eine Kollisionsgefahr zu erkennen. Bei Erkennen einer Kollisionsgefahr wird eine Warnung an den Fahrer ausgegeben. Zudem erfolgt eine Änderung des Knickwinkels (Lenkwinkels) und eine Reduzierung der Fahrgeschwindigkeit.

Ein ähnlicher Lader ist in der US 2014/297135 A1 beschrieben. Dabei wird die Bewegung des Fahrzeugs geschätzt und als Trajektorie abgebildet. Mithilfe von Sensoren (Laserscanner) wird der Fahrweg des Fahrzeugs auf Hindernisse überwacht. Bei Erkennen eines Hindernisses erfolgt eine Warnung des Fahrers bzw. ein Abbremsen.

Der Erfindung liegt daher die Aufgabe zugrunde, ein Arbeitsfahrzeug, insbesondere ein knickgelenktes Arbeitsfahrzeugs, anzugeben, bei dem wirkungsvoll eine Kollision mit einem Hindernis erkannt und - wenn möglich - verhindert werden kann.

Die Aufgabe wird erfindungsgemäß durch ein Arbeitsfahrzeug mit den Merkmalen von Anspruch 1 gelöst. Vorteilhafte Ausgestaltungen sind in den abhängigen Ansprüchen angegeben.

Es wird ein Arbeitsfahrzeug angegeben, mit einer ersten Fahreinheit und einer zweiten Fahreinheit; wobei beide Fahreinheiten jeweils einen eigenen Antrieb aufweisen; wobei eine der Fahreinheiten einen Fahrersitz aufweist; wobei zwischen den beiden Fahreinheiten ein Gelenk angeordnet ist, zum Koppeln der beiden Fahreinheiten derart, dass die beiden Fahreinheiten um wenigstens eine Hochachse des Arbeitsfahrzeugs relativ zueinander bewegbar sind; und wobei eine Kollisionswarnvorrichtung vorgesehen ist, zum Erkennen von Hindernissen in wenigstens einer Fahrtrichtung des Arbeitsfahrzeugs und zum Ausgeben eines Warnsignals, wenn ein Hindernis in dem Fahrweg des Arbeitsfahrzeugs erkannt wird.

Es handelt sich bei dem Arbeitsfahrzeug dementsprechend um ein knickgelenktes Arbeitsfahrzeug, derart, dass die beiden Fahreinheiten aufgrund des zwischen ihnen angeordneten Gelenks relativ zueinander bewegbar bzw. verschwenkbar sind. Dadurch ist es möglich, die an den Fahreinheiten vorgesehenen Räder bzw. Radachsen in einem Winkel zueinander zu stellen, um auf diese Weise eine Lenkwirkung beim Fortbewegen des Arbeitsfahrzeugs zu erreichen.

Insbesondere kann jede der Fahreinheiten einen eigenen Antrieb in Form von angetriebenen Rädern oder Radachsen aufweisen. Dieser Antrieb kann z.B. ein hydrostatischer Antrieb oder ein Elektroantrieb sein, der die Räder drehend antreibt. Im Fall eines hydrostatischen Antriebs muss darüber hinaus an geeigneter Stelle auf einer der Fahreinheiten ein Antriebsmotor, z.B. ein Dieselmotor vorgesehen sein, der eine Hydraulikpumpe antreibt, um auf diese Weise den erforderlichen Hydraulikdruck zu erzeugen, der die hydrostatischen Antriebe an den Rädern in an sich bekannter Weise versorgt. Die Räder bzw. Radachsen ihrerseits sind winkelmäßig starr an den sie tragenden Fahreinheiten befestigt. Das heißt, die Räder können nicht hinsichtlich eines Lenkwinkels relativ zu der sie tragenden Fahreinheit um die Hochachse verschwenkt werden, anders als dies z.B. bei einer Pkw-Lenkung der Fall ist.

Der Fahrersitz ist als Aufenthaltsort für den Fahrer zu verstehen. Es kann sich dabei auch um einen Fahrerstand handeln. Ebenso ist es möglich, dass der Fahrersitz durch eine Fahrerkabine umschlossen ist, um den Fahrer vor äußeren Einflüssen zu schützen.

Mit Hilfe der Kollisionswarnvorrichtung können Hindernisse in wenigstens einer Fahrtrichtung erkannt werden. Hierbei ist es besonders sinnvoll, wenn Hindernisse in beiden Fahrtrichtungen, also in Vorwärts- und in Rückwärtsfahrtrichtung erkannt werden können.

Die Kollisionswarnvorrichtung kann in geeigneter Weise ausgebildet sein und insbesondere Sensoren aufweisen, wie später noch erläutert wird. Insbesondere ist die Kollisionswarnvorrichtung dazu ausgebildet, die Eigenbewegung des Arbeitsfahrzeugs zu berücksichtigen, also die Fahrtrichtung und Fahrgeschwindigkeit sowie die Lenkrichtung. Zudem kann die Kollisionswarnvorrichtung die Fahrzeugabmessungen, insbesondere Länge und Breite des Fahrzeugs berücksichtigen, um auf diese Weise präziser erkennen zu können, ob eine Kollision mit einem Hindernis zu befürchten ist.

Durch die Miteinbeziehung der Fahrzeugeigenbewegung und der Fahrzeuggeometrie sowie auch durch die Berücksichtigung der Sensorpositionen am Fahrzeug kann sehr präzise prognostiziert werden, wie hoch das Kollisionsrisiko ist. Dabei ist es ebenso möglich, den Fahrweg als Fahrweg-Vorhersage bei Beibehaltung von Fahrtrichtung und Fahrgeschwindigkeit zu berücksichtigen. Dies ist insbesondere dann relevant, wenn das Hindernis als lediglich am Rand liegend erkannt wird und die Möglichkeit besteht, dass das Arbeitsfahrzeug das Hindernis passiert, ohne mit ihm zu kollidieren.

Die Kollisionswarnvorrichtung kann eine Nahbereichserkennungseinrichtung aufweisen, zum Erkennen von Hindernissen in einem Nahbereich von bis zu maximal 5 m, insbesondere in einem Nahbereich von bis zu 3 m. Dieser Nahbereich liegt dementsprechend unmittelbar vor der Kollisionswarnvorrichtung bzw. zugehörigen Sensoren und damit vor der jeweiligen Fahreinheit, die die Kollisionswarnvorrichtung trägt. Dabei erstreckt sich der Nahbereich weg von der Nahbereichserkennungseinrichtung. Die Breite des Nahbereichs ist seitlich wenigstens durch die Fahrzeugbreite definiert. Sie kann aber auch breiter definiert sein, um jeweils einen Sicherheitsbereich links und rechts vom Fahrzeug zu erfassen.

Die Nahbereichserkennungseinrichtung ist dementsprechend dazu ausgebildet, Hindernisse zu erkennen, die unmittelbar vor dem Arbeitsfahrzeug liegen und gegebenenfalls vom Fahrer trotz aller Bemühungen nicht erkannt werden können. Dies können z.B. größere Steine oder auch andere Arbeitsgeräte sein, die gerade bei Baustellen auf dem Boden liegen und für den Fahrer durch das Fahrzeug selbst oder Anbauteile (Mulde, Ladeschaufel) verdeckt sind.

Die Kollisionswarnvorrichtung kann eine Fernbereichserkennungseinrichtung aufweisen, zum Erkennen von Hindernissen in einem Fernbereich auch von mehr als 5 m, z.B. bis zu 10 m, bis zu 15 m oder bis zu 20 m. Der Fernbereich kann seitlich ebenfalls wenigstens durch die Fahrzeugbreite definiert sein oder auch durch einen zusätzlichen breiteren Sicherheitsbereich.

Zwischen dem Nahbereich und dem Fernbereich gibt es keine strenge Abgrenzung. Ohne weiteres können sich die beiden Bereiche auch zumindest teilweise überlappen.

Dabei kann die Kollisionswarnvorrichtung ausgebildet sein, um unter Berücksichtigung des Lenkwinkels den Fahrweg (Bewegungspfad) vorherzusagen und dabei auch entsprechend gekrümmte Fahrwege zu prognostizieren.

Die Kollisionswarnvorrichtung kann zwei Kollisionssensoren aufweisen, wobei einer der Kollisionssensoren an der einen Fahreinheit angeordnet ist und der andere Kollisionssensor an der anderen Fahreinheit angeordnet ist. Die jeweiligen Kollisionssensoren überwachen den Raum vor dem Arbeitsfahrzeug in Fahrtrichtung. Dementsprechend ist es möglich, dass immer der Kollisionssensor aktiviert ist, wenn die ihn tragende Fahreinheit in Fahrtrichtung vorne angeordnet ist und in Vorwärtsrichtung fährt. Alternativ können auch beide Kollisionssensoren permanent aktiv sein und jeweils den Raum vor der jeweiligen Fahreinheit, also in Vorwärts- und Rückwärtsrichtung, überwachen.

Die Kollisionssensoren können insbesondere auch Teil der Nah- und der Fernbereichserkennungseinrichtung sein. Sie sind demenentsprechend geeignet auszuwählen.

Die Kollisionssensoren können ausgewählt sein aus der Gruppe Radarsensoren, Kamerasensoren, Ultraschallsensoren, Lidarsensoren (Light detection and ranging). Dabei ist es ohne weiteres möglich, auch mehrere Sensortypen miteinander zu kombinieren. So werden insbesondere Ultraschallsensoren eher für die Nahbereichserkennung sinnvoll sein, während Radar- oder Lidarsensoren für die Fernbereichserkennung genutzt werden.

Kamerasensoren sind in bekannter Weise mit einer entsprechenden Auswerteeinrichtung zu verbinden, die in der Lage ist, die von der Kamera gelieferten Bilder in vorgegebenen Kategorien auszuwerten und zu klassifizieren, um auf diese Weise Hindernisse zu erkennen. Derartige Auswerteeinrichtungen können ggfs. auch KI-Vorrichtungen aufweisen (Künstliche Intelligenz).

Generell muss jedoch die Kollisionswarnvorrichtung nicht dazu ausgebildet sein, verschiedene Objekttypen, wie z.B. Personen, andere Fahrzeuge, Steinbrocken, zu differenzieren. Eine Identifikation der einzelnen Objekte ist nicht erforderlich, anders, als dies z.B. bei Systemen zum autonomen Fahren für Kraftfahrzeuge der Fall ist. Die Kollisionswarnvorrichtung dient alleine der Kollisionsvermeidung und unterscheidet nicht, ob sich in Bewegungsrichtung des Arbeitsfahrzeugs ein Mensch, ein Gegenstand oder ein Felsbrocken befindet.

Die Kollisionswarnvorrichtung kann wenigstens einen Gierratensensor aufweisen. Der Gierratensensor kann insbesondere als Inertialmesseinheit (IMU) oder Inertialsensor ausgebildet sein und dient zum Erfassen der Gierrate der betreffenden Fahreinheit, auf der der Gierratensensor angebracht ist. So ist es auch möglich, dass beide Fahreinheiten jeweils einen eigenen Gierratensensor aufweisen.

Die Kollisionswarnvorrichtung kann wenigstens einen Geschwindigkeitssensor aufweisen. Der Geschwindigkeitssensor dient zum Erfassen der Fahrgeschwindigkeit bzw. Longitudinalgeschwindigkeit des Arbeitsfahrzeugs. Hierzu sind verschiedene Messprinzipien denkbar. Z.B. kann der Geschwindigkeitssensor als Drehzahlsensor am Abtrieb vorgesehen sein, zum Ermitteln der Fahrgeschwindigkeit aufgrund der Abtriebsdrehzahl, wobei unter Umständen bei bekanntem Übersetzungsverhältnis (Getriebe) und bekannter Radgeometrie (Durchmesser des Rads) aus der gemessenen Abtriebsdrehzahl die Fahrgeschwindigkeit berechnet werden kann.

Die Kollisionswarnvorrichtung kann wenigstens einen Lenkwinkelsensor aufweisen. Da es sich bei dem Arbeitsfahrzeug insbesondere um ein knickgelenktes Arbeitsfahrzeug handelt, kann der Lenkwinkelsensor dazu ausgebildet sein, den Winkel zwischen den beiden Fahreinheiten zu erfassen. Z.B. kann der Lenkwinkelsensor als Sensor zum Erfassen des Lenkwinkels am Knickgelenk (Winkelsensor) ausgebildet sein. Ebenso kann der Lenkwinkelsensor ein Sensor zum Erfassen des Zylinderhubs sein, der durch Aktuierung des zur Knicklenkung genutzten hydraulischen Zylinders bewirkt wird. Ebenso ist es möglich, den Lenkwinkel direkt am vom Fahrer bedienten Lenkrad abzugreifen.

Die Kollisionswarnvorrichtung kann eine mit den Sensoren gekoppelte Steuereinrichtung aufweisen, zum Erstellen einer Kollisionsvorhersage aufgrund von Informationen, die von den Sensoren übermittelt werden. Dementsprechend kann die Steuereinrichtung mit sämtlichen oben angegebenen Sensoren gekoppelt werden.

Je mehr Sensoren ihre Information an die Steuereinrichtung liefern, desto präziser wird die Kollisionsvorhersage ausfallen können.

Zur Ermittlung der Kollisionsvorhersage ist die Steuereinrichtung geeignet, aufgrund der Informationen der Gierratensensoren und des Geschwindigkeitssensors die Fahrzeugeigenbewegung zu ermitteln und an die Kollisionssensoren bzw. z.B. den Radarsensor zu übergeben. Die Radarsensoren berücksichtigen dann bei ihrer Messung die Eigenbewegung des Fahrzeugs entsprechend.

Aufgrund der Ergebnisse des Radarsensors können durch die Steuereinrichtung Vorhersagen über die Bewegungspfade aller erkannten Objekte getroffen werden. Stillstehende Objekte werden als stillstehend erkannt, sich bewegende Objekte werden hinsichtlich ihrer Bewegungspfade (Bewegungsrichtung und Bewegungsgeschwindigkeit) erkannt.

Auf Basis verschiedener Parameter, wie z.B. dem Lenkwinkel (Lenkwinkelsensor) und der Fahrgeschwindigkeit (Geschwindigkeitssensor) kann eine Vorhersage des Bewegungspfads des Arbeitsfahrzeugs getroffen werden.

Mithilfe der Informationen der verschiedenen Sensoren lassen sich der zu überwachende Nahbereich und der zu überwachende Fernbereich berechnen. Insbesondere der Fernbereich ändert sich in Abhängigkeit vom Lenkwinkel, da vor allem der Fernbereich vom Bewegungspfad des Fahrzeugs abhängt, der wiederum durch den Lenkwinkel entscheidend bestimmt wird.

Nachfolgend kann durch die Steuereinrichtung eine Kollisionsvorhersage getroffen werden. Dabei werden insbesondere die kritischen Objekte erfasst, die sich dem Fahrzeug annähern bzw. denen sich das Fahrzeug annähert. Dabei kann auch eine Zeit berechnet werden, die zur Abwendung einer Kollision bleibt ("Time-to-Collision").

Nach Erkennung der kritischen Objekte, mit denen eine Kollision befürchtet werden muss, kann durch die Steuereinrichtung ein Warnsignal erzeugt werden, mit unterschiedlicher Qualität. Die Steuereinrichtung kann somit je nach Grad der Kollisionswahrscheinlichkeit ein dem Grad der Kollisionswahrscheinlichkeit entsprechendes Warnsignal erzeugen und damit vorgegebene Folgefunktionen bewirken.

Je nach Informationsgehalt des Warnsignals kann eine optische oder eine akustische Warnung erzeugt werden. Ebenso ist es möglich, einen Verzögerungseingriff in das Arbeitsfahrzeug zu bewirken, um eine Verminderung der Fahrgeschwindigkeit oder ein vollständiges Stoppen des Fahrzeugs zu erreichen.

Die Informationen über Warnung, möglicher Verzögerungseingriff, Position von kritischen Objekten können auch in geeigneter Weise an den Fahrer übermittelt werden. Dies ist z.B. möglich über eine Mensch-Maschine-Schnittstelle (HMI - Human-Machine-Interface), wie z.B. ein Display oder eine Warnlampe.

Eine der Fahreinheiten weist einen Fahrersitz auf, die andere eine kippbare Mulde als Arbeitswerkzeug.

Auf diese Weise kann das Arbeitsfahrzeug als mobile Arbeitsmaschine, wie z.B. als Dumper, Radlader oder Teleskoplader ausgebildet sein.

Es ist eine Deaktivierungsvorrichtung vorgesehen, zum Deaktivieren, insbesondere zum temporären Deaktivieren der Kollisionswarnvorrichtung. Dementsprechend kann die Kollisionswarnvorrichtung in bestimmten Situationen abgeschaltet werden, um das Erzeugen von in diesen Situationen unerwünschten Warnsignalen zu verhindern.

Das Abschalten bzw. Deaktivieren kann z.B. von einem Bediener vorgenommen werden, beispielsweise durch Betätigen eines Schalters. Damit hat der Bediener die Möglichkeit, die Kollisionswarnvorrichtung in entsprechenden Situationen abzuschalten, z.B. beim Einparken.

Erfindungsgemäss ist ein automatisches Deaktivieren vorgesehen, wenn die Maschinensteuerung erkennt, dass die an dem Arbeitsfahrzeug vorgesehene Mulde zum Entladen angehoben wird. So wird immer dann, wenn der Bediener die Mulde anhebt und dadurch Schüttgüter in den Bereich der Kollisionssensoren gelangen können, automatisch die Kollisionswarnvorrichtung abgeschaltet, um Fehlwarnungen oder störende Warnsignale zu vermeiden.

Diese und weitere Vorteile und Merkmale werden nachfolgend anhand von Beispielen unter Zuhilfenahme der begleitenden Figuren näher erläutert.

Es zeigen:
- **Fig. 1**: in schematischer Seitenansicht ein Arbeitsfahrzeug;
- **Fig. 2**: eine erfindungsgemäße Kollisionswarnvorrichtung in schematischer Darstellung;
- **Fig. 3**: ein erfindungsgemäßes Arbeitsfahrzeug mit Kollisionswarnvorrichtung;
- **Fig. 4**: ein Ablaufdiagramm mit einem Algorithmus, wie er in der Kollisionswarnvorrichtung verwirklicht ist; und
- **Fig. 5**: ein Beispiel für eine Berechnungsmatrix zur Auswertung durch die Kollisionswarnvorrichtung.

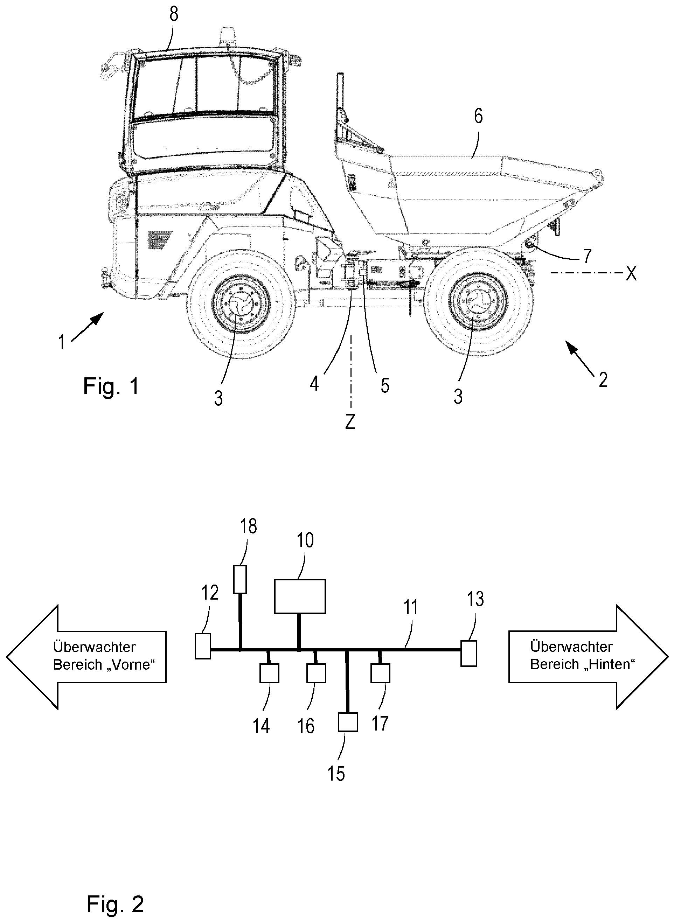

Fig. 1 zeigt in schematischer Darstellung einen knickgelenkten Dumper als Beispiel für ein erfindungsgemäßes Arbeitsfahrzeug. Als weitere Beispiele für das Arbeitsfahrzeug eignen sich auch Radlader, Teleskoplader o.ä.

Das Fahrzeug weist eine als erste Fahreinheit dienende Fahreinheit 1 und eine als zweite Fahreinheit dienende Muldeneinheit 2 auf, die jeweils eine starre Radachse 3 mit Rädern tragen. Zwischen der Fahreinheit 1 und der Muldeneinheit 2 ist ein Knickgelenk 4, im vorliegenden Fall sogar ein sogenanntes Knick-Pendel-Gelenk, angeordnet. Ein derartiges Knickgelenk 4 dient zum Koppeln der Fahreinheit 1 mit der Muldeneinheit 2 derart, dass die Fahreinheit 1 und die Muldeneinheit 2 sowohl um eine Hochachse Z als auch um eine Längsachse X relativ zueinander bewegbar bzw. verschwenkbar sind.

Die Verschwenkung um die Hochachse Z ermöglicht eine Lenkbewegung dadurch, dass die beiden Radachsen 3 zueinander in einem Winkel gestellt werden können (sogenannte Knick-Bewegung). Die Beweglichkeit um die Längsachse X wird auch als "Pendeln" bezeichnet und erhöht die Geländegängigkeit des Arbeitsfahrzeugs.

Die Verschwenkbewegung um die Hochachse Z wird durch eine Lenkvorrichtung bewirkt, die eine hydraulische Kolben-Zylinder-Einheit 5 umfasst. Mit Hilfe der Kolben-Zylinder-Einheit 5 kann die Winkelstellung zwischen der Fahreinheit 1 und der Muldeneinheit 2 eingestellt werden. Die Muldeneinheit 2 trägt eine Mulde 6 an ihrer Oberseite. Die Mulde 6 ist durch einen nicht dargestellten hydraulischen Schwenkmechanismus um eine Schwenkachse 7 verschwenkbar bzw. anhebbar. Dadurch kann die z.B. loses Schüttgut tragende Mulde 6 einfach entleert werden.

Auf der Fahreinheit 1 ist ein Fahrerschutzaufbau 8 aufgebaut, der als Kabine einen nicht dargestellten Fahrersitz umschließt. Der Fahrerschutzaufbau 8 wird unter anderem durch Bügel gebildet, die einen Überrollschutz bieten, wodurch eine ROPS/FOPS-Struktur verwirklicht ist.

Ein derartiges Arbeitsfahrzeug ist z.B. aus der DE 20 2016 100 964 U1 bekannt und lässt sich durch eine erfindungsgemäße Kollisionswarnvorrichtung ergänzen.

Fig. 2 zeigt den schematischen Aufbau der Kollisionswarnvorrichtung.

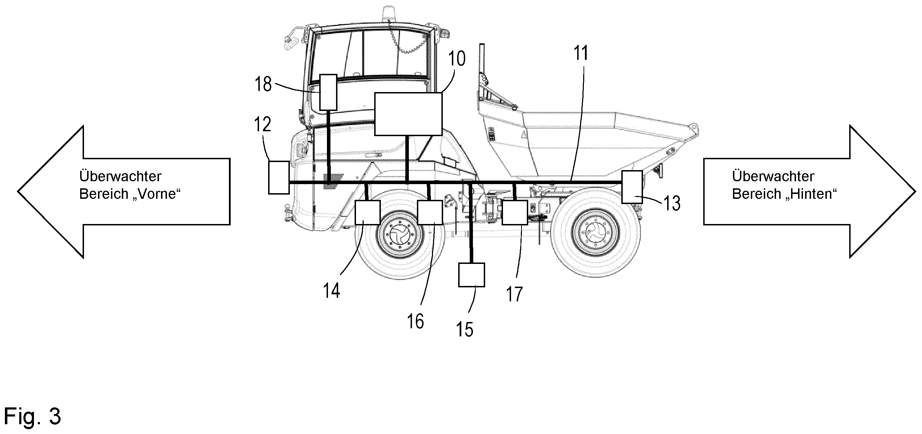

Fig. 3 zeigt den schematischen Zusammenbau der Kollisionswarnvorrichtung von Fig. 2 und des Arbeitsfahrzeugs von Fig. 1 und dabei insbesondere die Anordnung der einzelnen Komponenten am Arbeitsfahrzeug.

Die Kollisionswarnvorrichtung weist ein Steuergerät 10 auf, das über eine Kommunikationsinfrastruktur 11 mit verschiedenen Komponenten gekoppelt ist.

Die Kommunikationsinfrastruktur 11 stellt eine elektronische Verbindung der verschiedenen Sensoren und des Steuergeräts 10 zur Verfügung und kann z.B. mit Hilfe eines bekannten Fahrzeug-Bussystems (CAN-Bus) realisiert werden.

Weiterhin weist die Kollisionswarnvorrichtung einen vorderen Radarsensor 12 und einen hinteren Radarsensor 13 zur Überwachung der Bereiche vor und hinter dem Arbeitsfahrzeug auf. Die Angabe "vorne" und "hinten" orientiert sich an einer Hauptfahrtrichtung des Fahrzeugs. Gegebenenfalls können die Richtungen auch umgekehrt werden.

Die Radarsensoren 12, 13 können in geeigneter Weise technisch ausgeführt werden. Insbesondere eignen sich dafür klassische Radarsensoren oder auch LidarSensoren (Light Detection and Ranging), die ein dreidimensionales Laserscanning ermöglichen.

Derartige Radarsensoren finden bereits bei Kraftfahrzeugen seit einiger Zeit Verwendung, z.B. für Abstandsregeltempomaten.

Die Kollisionsvorrichtung weist weiterhin einen Geschwindigkeitssensor 14 sowie einen Lenkwinkelsensor 15 auf. Der Geschwindigkeitssensor 14 ist dazu ausgebildet, die Längsgeschwindigkeit des Fahrzeugs zu erfassen. Dies ist z.B. möglich durch Erfassung der Drehzahl der Radachsen 3 bzw. der von den Radachsen getragenen Räder, deren Dimension (Durchmesser) bekannt ist, so dass daraus die Fahrgeschwindigkeit errechenbar ist.

Der Lenkwinkelsensor 15 kann insbesondere den Winkel der beiden Fahreinheiten 1, 2 zueinander erfassen und daraus den Lenkwinkel ableiten.

Sowohl die Fahreinheit 1 als auch die Muldeneinheit 2 (zweite Fahreinheit) tragen jeweils eine Inertialmesseinheit, nämlich eine vordere Inertialmesseinheit 16 (IMU) an der Fahreinheit 1 und eine hintere Inertialmesseinheit 17 (IMU) an der Muldeneinheit 2 (zweite Fahreinheit).

Die als Gierratensensoren dienenden Inertialmesseinheiten 16, 17 erfassen jeweils die Drehbewegung der ihnen zugeordneten Fahreinheit und erlauben so Rückschlüsse auf die Eigenbewegung des Arbeitsfahrzeugs.

Die beiden Radarsensoren 12, 13 sind in geeigneter Weise an den Stirnseiten des Fahrzeugs anzubringen, um ein möglichst freies Blickfeld auf die Bereiche vor und hinter dem Fahrzeug zu haben und um auf diese Weise Hindernisse mit großer Zuverlässigkeit erkennen zu können.

Das Steuergerät 10 ermittelt aufgrund der Informationen von den diversen Sensoren eine Einschätzung einer Kollisionswahrscheinlichkeit und gibt optional über ein Display 18 Informationen für den Fahrer am Fahrersitz.

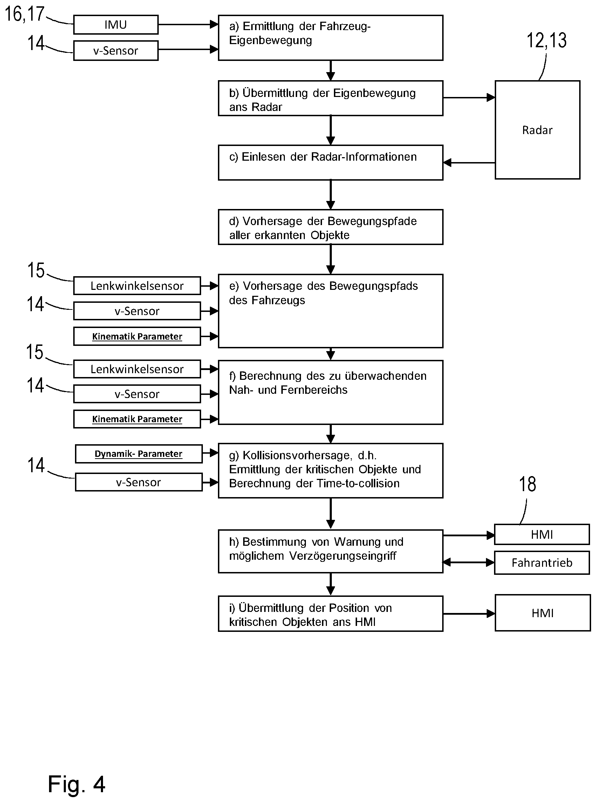

Fig. 4 zeigt in schematischer Darstellung den Algorithmus der Kollisionswarnvorrichtung. Insbesondere zeigt Fig. 4 als Ablaufdiagramm die Arbeitsweise des Steuergeräts 10 in verschiedenen Schritten mit den entsprechenden Funktionen und Informationsflüssen.

In Schritt a wird die Fahrzeugeigenbewegung basierend auf Informationen von den Inertialmesseinheiten 16, 17 (IMU, Inertialsensoren, Gierratensensoren) und des Geschwindigkeitssensors 14 (v-Sensor) ermittelt.

In Schritt b werden die Angaben über die Eigenbewegung (Gierrate und Longitudinalgeschwindigkeit) an den jeweils in Fahrtrichtung aktiven Radarsensor 12, 13 übergeben. Der je nach Fahrtrichtung rückwärtig orientierte Radarsensor 12, 13 kann in diesem Fall funktionslos bleiben. Er kann aber auch bei einer entsprechenden Ausführungsform weiterhin genutzt werden, um auch rückwärtige Kollisionen zu verhindern.

Im Schritt c werden Informationen vom Radarsensor 12, 13 zu erkannten Objekten ermittelt. Zu diesen Informationen gehören insbesondere die Position der erkannten Objekte (x-, y-Koordinaten relativ zum Radar) sowie deren Geschwindigkeit (x-, y-Geschwindigkeiten relativ zum Radar).

Aufgrund dieser Angaben berechnet das Steuergerät 10 im Schritt d die vorhergesagten Bewegungspfade aller vom Radar erfassten Objekte. Bei diesen Objekten kann es sich insbesondere um Hindernisse wie Personen, andere Maschinen, Gebäude, größere Steine bzw. Felsbrocken etc. handeln.

In Schritt e erfolgt die Berechnung des vorhergesagten Bewegungspfads des Fahrzeugs unter Berücksichtigung der Longitudinalgeschwindigkeit (Geschwindigkeitssensor 14 bzw. v-Sensor) und der Lenkwinkelinformation (Lenkwinkelsensor 15) sowie der bekannten Fahrzeugkinematik des knickgelenkten Fahrzeugs.

In Schritt f erfolgt die Berechnung des zu überwachenden Bereichs (Nahbereich und Fernbereich) in Abhängigkeit von Fahrzeugparametern, insbesondere in Abhängigkeit von der Fahrzeuggeometrie, d.h. der Spurbreite sowie der Longitudinalgeschwindigkeit und dem erfassten Lenkwinkel, basierend auf der fahrzeugspezifischen Kinematik.

In Schritt g ermittelt das Steuergerät 10 eine Kollisionsvorhersage. Dazu wird auf Grundlage der vorhergesagten Bewegungspfade der anderen Objekte und des Fahrzeugs sowie anhand des berechneten zu überwachenden Bereichs ermittelt, ob eine Kollision bevorsteht und wie viel Zeit zur Kollision verbleibt (Time-to-Collision).

Auf der Basis der Kollisionsvorhersage kann das Steuergerät 10 ein Warnsignal generieren, das einerseits eine Warnung auslösen kann (falls noch genug Zeit für eine Reaktion durch den Fahrer bleibt) oder direkt in die Steuerung des Arbeitsfahrzeugs eingreift, um eine Verzögerung durch Eingriff in den Fahrantrieb, beispielsweise durch hydrostatisches Verzögern zu bewirken. Dabei ist es auch möglich, direkt in die Betriebsbremse einzuwirken, um eine Verzögerung auszulösen. Je nach Gefährdungslage ist es also möglich, dass lediglich eine akustische oder optische Warnung erzeugt wird oder dass das Steuergerät 10 die Geschwindigkeit des Fahrzeugs vermindert bzw. vollständig abbremst.

In Schritt i erfolgt die Übermittlung der Position von kritischen Objekten zur Visualisierung auf dem Display 18, um den Fahrer zu informieren. Schritt i ist optional und kann parallel zu den oben erläuterten anderen Schritten erfolgen.

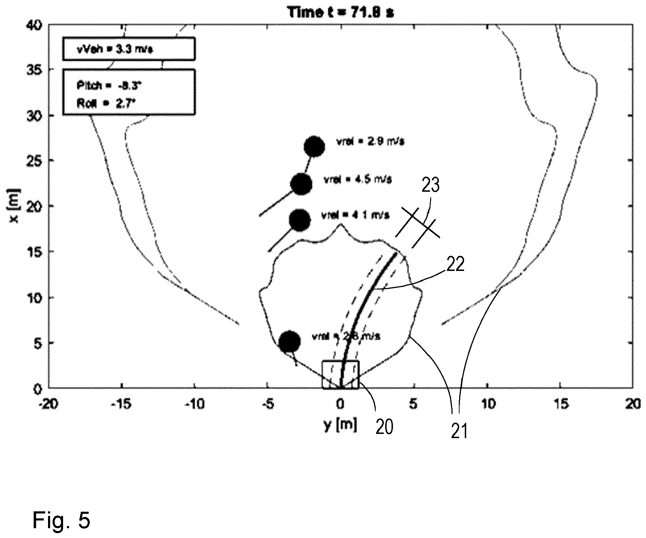

Fig. 5 zeigt ein Beispiel für eine Berechnungsmatrix mit den jeweiligen beweglichen Objekten, auf deren Grundlage die Kollisionswarnvorrichtung Kollisionsvorhersagen erstellen kann.

Dabei ist insbesondere ein Koordinatensystem dargestellt, wobei x die Entfernung vom Fahrzeug in der Horizontalen in Geradeausrichtung ist, während y die Entfernung quer zur Hauptrichtung ist. Dementsprechend befindet sich die für die Kollisionsanalyse relevante vordere Stirnseite des Fahrzeugs bei den Koordinaten 0,0. Das Koordinatensystem spannt die Fläche vor dem Fahrzeug in der aktuellen Fahrtrichtung auf und erstreckt sich senkrecht von der Stirnfläche des Fahrzeugs.

Ausgehend von der Stirnseite des Fahrzeugs ist ein Nahbereich 20 definiert, der sich bis etwa 3 m (auch andere Entfernungen sind möglich, z.B. bis zu 2 m oder bis zu 5 m) von der Stirnseite des Fahrzeugs nach vorne erstreckt und eine Breite aufweist, die etwas größer als die Fahrzeugbreite sein kann, z.B. 3 m.

Zudem wird ein Fernbereich 21 definiert, er sich ebenfalls von der Stirnseite des Fahrzeugs in Fahrtrichtung erstreckt. Seine Größe hängt insbesondere von der Ausgestaltung und Leistungsfähigkeit der entsprechenden Sensoren ab, insbesondere von den Radarsensoren 12, 13.

Weiterhin wird ein prognostizierter Fahrzeugweg 22 dargestellt. Dieser hängt ab von der Lenkwinkelstellung und der Fahrzeuggeschwindigkeit und kann durch eine vorgegebene Fahrzeugbreite 23 - ggfs. mit einem weiteren, sich in die Breite erstreckenden Sicherheitsabstand - ergänzt werden.

Im gezeigten Beispiel wurden mit Hilfe des an den Koordinaten 0,0 angeordneten vorderen Radarsensors 12 vier Objekte identifiziert, die durch schwarze Punkte gekennzeichnet sind. Die Relativgeschwindigkeiten dieser Objekte sind durch Zahlen (Beträge) und durch Bewegungsrichtungen (Linien, ausgehend von den schwarzen Punkten) markiert. Die Länge der die Bewegungsrichtungs-Linien kann dabei der Geschwindigkeit der betreffenden Objekte entsprechen bzw. zu dieser proportional sein.

So ist es erkennbar, dass sich in der aktuellen Situation der zweite Punkt von oben sich mit einer Geschwindigkeit von 4,5 m pro Sekunde links am prognostizierten Fahrzeugweg 22 des eigenen Fahrzeugs vorbeibewegt. Auch die anderen Punkte bewegen sich nicht auf Kollisionskurs, vorausgesetzt, dass das eigene Fahrzeug sich entlang dem Fahrzeugweg 22 bewegt.

Für die Erarbeitung der Kollisionsvorhersage ist die Miteinbeziehung der Fahrzeugeigenbewegung und der Fahrzeuggeometrie sowie der bekannten Sensorpositionen am Fahrzeug zweckmäßig und kann in dem vom Steuergerät 10 ausgeführten Algorithmus berücksichtigt werden.

Dabei können optional auch der Lenkwinkel, weitere Maschinenzustände wie eine Arbeitsstellung einer Laderschaufel (eines Radladers) oder eines Teleskoparms (bei einem Teleskoplader), eine Straßenfahrtstellung, die Neigung im Gelände etc. berücksichtigt werden.

## Patentansprüche

1. Arbeitsfahrzeug, mit
- einer ersten Fahreinheit (1) und einer zweiten Fahreinheit (2);
wobei
- beide Fahreinheiten (1, 2) jeweils einen eigenen Antrieb aufweisen;
- eine der Fahreinheiten (1) einen Fahrersitz aufweist;
- die andere Fahreinheit (2) eine kippbare Mulde (6) aufweist;
- zwischen den beiden Fahreinheiten (1, 2) ein Gelenk (4) angeordnet ist, zum Koppeln der beiden Fahreinheiten (1, 2) derart, dass die beiden Fahreinheiten (1, 2) um wenigstens eine Hochachse (Z) des Arbeitsfahrzeugs relativ zueinander bewegbar sind;
- eine Kollisionswarnvorrichtung vorgesehen ist, zum Erkennen von Hindernissen in wenigstens einer Fahrtrichtung des Arbeitsfahrzeugs und zum Ausgeben eines Warnsignals, wenn ein Hindernis in dem Fahrweg des Arbeitsfahrzeugs erkannt wird;
- eine Deaktivierungsvorrichtung vorgesehen ist, zum Deaktivieren der Kollisionswarnvorrichtung; und wobei
- die Deaktivierungsvorrichtung ausgebildet ist zum automatischen Deaktivieren der Kollisionswarnvorrichtung, wenn die Mulde (6) angehoben wird.

2. Arbeitsfahrzeug nach Anspruch 1, wobei die Kollisionswarnvorrichtung eine Nahbereichserkennungseinrichtung aufweist, zum Erkennen von Hindernissen in einem Nahbereich bis zu maximal 5 Metern.

3. Arbeitsfahrzeug nach einem der vorstehenden Ansprüche, wobei die Kollisionswarnvorrichtung eine Fernbereichserkennungseinrichtung aufweist, zum Erkennen von Hindernissen in einem Fernbereich von mehr als 5 Metern.

4. Arbeitsfahrzeug nach einem der vorstehenden Ansprüche, wobei
- die Kollisionswarnvorrichtung zwei Kollisionssensoren (12, 13) aufweist; und wobei
- einer der Kollisionssensoren (12) an der einen Fahreinheit (1) angeordnet ist und der andere Kollisionssensor (13) an der anderen Fahreinheit (2) angeordnet ist.

5. Arbeitsfahrzeug nach einem der vorstehenden Ansprüche, wobei die Kollisionssensoren (12, 13) ausgewählt sind aus der Gruppe Radarsensoren, Kamerasensoren, Ultraschallsensoren, Lidar.

6. Arbeitsfahrzeug nach einem der vorstehenden Ansprüche, wobei die Kollisionswarnvorrichtung wenigstens einen Gierratensensor (16, 17) aufweist.

7. Arbeitsfahrzeug nach einem der vorstehenden Ansprüche, wobei die Kollisionswarnvorrichtung wenigstens einen Geschwindigkeitssensor (14) aufweist.

8. Arbeitsfahrzeug nach einem der vorstehenden Ansprüche, wobei die Kollisionswarnvorrichtung wenigstens einen Lenkwinkelsensor (15) aufweist.

9. Arbeitsfahrzeug nach einem der vorstehenden Ansprüche, wobei die Kollisionswarnvorrichtung eine mit den Sensoren gekoppelte Steuereinrichtung (10) aufweist, zum Erstellen einer Kollisionsvorhersage aufgrund von Informationen, die von den Sensoren übermittelt werden.

10. Arbeitsfahrzeug nach einem der vorstehenden Ansprüche, wobei die Steuereinrichtung (10) ausgebildet ist zum Erzeugen des Warnsignals in Abhängigkeit von der Kollisionsvorhersage.

11. Arbeitsfahrzeug nach einem der vorstehenden Ansprüche, wobei das Warnsignal unterschiedliche Informationen enthält und wenigstens eine der Aktionen in Abhängigkeit von dem Informationsgehalt des Warnsignals auslösbar ist.

12. Arbeitsfahrzeug nach einem der vorstehenden Ansprüche, wobei durch das Warnsignal wenigstens eine der folgenden Aktionen auslösbar ist:
- Erzeugen eines akustischen Signals;
- Erzeugen eines optischen Signals;
- Reduzieren der Fahrgeschwindigkeit;
- Stoppen des Arbeitsfahrzeugs.

## Claims

1. Work vehicle, comprising
- a first travelling unit (1) and a second travelling unit (2);
wherein
- both travelling units (1, 2) have a respective dedicated drive;
- one of the travelling units (1) has a driver's seat;
- the other travelling unit (2) has a tiltable skip (6);
- a joint (4) is arranged between the two travelling units (1, 2) in order to couple the two travelling units (1, 2) in such a way that the two travelling units (1, 2) are movable relative to one another about at least one vertical axis (Z) of the work vehicle;
- a collision warning apparatus is provided in order to detect obstacles in at least one direction of travel of the work vehicle and in order to output a warning signal if an obstacle is detected in the travel path of the work vehicle;
- a deactivation apparatus is provided in order to deactivate the collision warning apparatus; and wherein
- the deactivation apparatus is designed to automatically deactivate the collision warning apparatus if the skip (6) is raised.

2. Work vehicle as claimed in claim 1, wherein the collision warning apparatus has a close-range detection device in order to detect obstacles in a close range of up to a maximum of 5 metres.

3. Work vehicle as claimed in any one of the preceding claims, wherein the collision warning apparatus has a far-range detection device in order to detect obstacles in a far range of more than 5 meters.

4. Work vehicle as claimed in any one of the preceding claims, wherein
- the collision warning apparatus has two collision sensors (12, 13); and wherein
- one of the collision sensors (12) is arranged on one travelling unit (1) and the other collision sensor (13) is arranged on the other travelling unit (2).

5. Work vehicle as claimed in any one of the preceding claims, wherein the collision sensors (12, 13) are selected from the group of radar sensors, camera sensors, ultrasonic sensors, lidar.

6. Work vehicle as claimed in any one of the preceding claims, wherein the collision warning apparatus has at least one yaw rate sensor (16, 17).

7. Work vehicle as claimed in any one of the preceding claims, wherein the collision warning apparatus has at least one speed sensor (14).

8. Work vehicle as claimed in any one of the preceding claims, wherein the collision warning apparatus has at least one steering angle sensor (15).

9. Work vehicle as claimed in any one of the preceding claims, wherein the collision warning apparatus has a control device (10) coupled to the sensors in order to create a collision prediction on the basis of information communicated by the sensors.

10. Work vehicle as claimed in any one of the preceding claims, wherein the control device (10) is designed to generate the warning signal in dependence upon the collision prediction.

11. Work vehicle as claimed in any one of the preceding claims, wherein the warning signal contains different information and at least one of the actions can be triggered in dependence upon the information content of the warning signal.

12. Work vehicle as claimed in any one of the preceding claims, wherein at least one of the following actions can be triggered by the warning signal:
- generating an acoustic signal;
- generating an optical signal;
- reducing the travel speed;
- stopping the work vehicle.

## Revendications

1. Véhicule de travail avec
- une première unité de roulement (1) et une deuxième unité de roulement (2) ;
dans lequel
- les deux unités de roulement (1, 2) comprennent chacune son propre système d'entraînement ;
- une des unités de roulement (1) comprend un siège de conducteur ;
- l'autre unité de roulement (2) comprend une benne basculante (6) ;
- entre les deux unités de roulement (1, 2), est disposée une articulation (4), pour le couplage des deux unités de roulement (1, 2) de sorte que les deux unités de roulement (1, 2) peuvent être déplacées l'une par rapport à l'autre autour d'au moins un axe vertical (Z) du véhicule de travail ;
- un dispositif d'avertissement de collision est prévu, pour la détection d'obstacles dans au moins une direction de déplacement du véhicule de travail et pour la génération d'un signal d'avertissement lorsqu'un obstacle est détecté sur le trajet du véhicule de travail ;
- un dispositif de désactivation est prévu, pour la désactivation du dispositif d'avertissement de collision ; et dans lequel
- le dispositif de désactivation est conçu pour désactiver automatiquement le dispositif d'avertissement de collision lorsque la benne (6) est levée.

2. Véhicule de travail selon la revendication 1, dans lequel le dispositif d'avertissement de collision comprend un dispositif de détection à courte portée, pour la détection d'obstacles dans une zone proche jusqu'à 5 mètres maximum.

3. Véhicule de travail selon l'une des revendications précédentes, dans lequel le dispositif d'avertissement de collision comprend un dispositif de détection à longue portée, pour la détection d'obstacles dans une zone éloignée jusqu'à plus de 5 mètres.

4. Véhicule de travail selon l'une des revendications précédentes, dans lequel
- le dispositif d'avertissement de collision comprend deux capteurs de collision (12, 13) ; et dans lequel
- un des capteurs de collision (12) est disposé sur une unité de roulement (1) et l'autre capteur de collision (13) est disposé sur l'autre unité de roulement (2).

5. Véhicule de travail selon l'une des revendications précédentes, dans lequel les capteurs de collision (12, 13) sont sélectionnés dans le groupe constitué de capteurs radar, de capteurs à caméras, de capteurs à ultrasons, d'un lidar.

6. Véhicule de travail selon l'une des revendications précédentes, dans lequel le dispositif d'avertissement de collision comprend au moins un capteur de vitesse de lacet (16, 17).

7. Véhicule de travail selon l'une des revendications précédentes, dans lequel le dispositif d'avertissement de collision comprend au moins un capteur de vitesse (14).

8. Véhicule de travail selon l'une des revendications précédentes, dans lequel le dispositif d'avertissement de collision comprend au moins un capteur d'angle de braquage (15).

9. Véhicule de travail selon l'une des revendications précédentes, dans lequel le dispositif d'avertissement de collision comprend un dispositif de commande (10), couplé avec les capteurs, pour la génération d'une prédiction de collision sur la base des informations transmises par les capteurs.

10. Véhicule de travail selon l'une des revendications précédentes, dans lequel le dispositif de commande (10) est conçu pour générer le signal d'avertissement en fonction de la prédiction de collision.

11. Véhicule de travail selon l'une des revendications précédentes, dans lequel le signal d'avertissement contient différentes infirmations et au moins une des actions peut être déclenchée en fonction des informations contenues dans le signal d'avertissement.

12. Véhicule de travail selon l'une des revendications précédentes, dans lequel le signal d'avertissement permet de déclencher au moins une des actions suivantes :
- génération d'un signal acoustique ;
- génération d'un signal optique ;
- réduction de la vitesse de déplacement ;
- arrêt du véhicule de travail.
